# EUROPEAN PATENT APPLICATION

(11) **EP 4 380 014 A1**
(43) Date of publication of application: **05.06.2024**
(21) Application number: 22210312.9
(22) Date of filing: 29.11.2022
(51) Int. Cl.: H02K 3/32

(54) **INSULATION DEVICE, STATOR, ELECTRIC MACHINE**

(71) Applicant: MAHLE International GmbH, 70376 Stuttgart (DE)
(72) Inventor: GROBISA, Andraz, 5296 Kostanjevica na Krasu (SI)
(74) Representative: BRP Renaud & Partner mbB Rechtsanwälte Patentanwälte Steuerberater

(57) **Abstract**

The invention relates to an insulation device (1) for electrically insulating a stator winding (21) of a stator (20) of an electrical machine with respect to a pole piece (22) of this stator (20). The insulation device (1) comprises a plate-like base (2), made of an electrically insulating material, preferably of an electrically insulating plastic, in which a substantially rectangular through-opening (3) is arranged, having two opposite narrow sides (4a, 4b) and two likewise opposite broad sides (5a, 5b). The through hole (3) is used to receive a pole piece of the stator (20). The insulation device comprises a base collar (10) integrally formed on the base, which extends along the two broad and narrow sides (4a, 4b, 5a, 5b) of the through opening (3) and encloses the through opening (3) in sections. The base (2) and the base collar (10) are thus formed in one piece and of the same material. The base collar (10) has in the region of the two narrow sides (4a, 4b) in each case an undercut (7a, 7b) forming a collar opening (6a, 6b). Furthermore, the insulation device comprises a (first) insulation element (7a), which is preferably plate-like in shape and is also separate from the base, for closing one (first) (6a) of the two collar openings (6a, 6b).

## Description

The invention relates to an insulation device for electrically insulating a stator winding of a stator of an electrical machine with respect to a pole piece of this stator. Finally, the invention relates to an electrical machine comprising such a stator.

Stators for electrical machines typically comprise electrically energized stator windings arranged on pole shoes made of an electrically conductive material, usually a metal.

To ensure proper operation of the stator or electrical machine, it is essential to electrically insulate said pole pieces from the stator winding.

Conventional stators therefore often have a housing-like electrical insulation made of an electrically insulating material, usually a plastic, which is arranged between a respective pole shoe and the winding arranged on the pole shoe.

Such a conventional electrical insulation device is described, for example, in EP 0 353 285 B1.

The problem with such conventional electrical insulation devices is that they are relatively difficult to install between the pole piece and the stator winding.

Solutions known from the prior art, which allow simplified assembly, are associated with the disadvantage that certain areas between the stator winding and the pole shoe are not covered by the insulation device, so that the desired electrical insulation of the stator winding with respect to the pole shoe is not guaranteed in these areas.

It is therefore an object of the present invention to provide an improved embodiment for an insulation device for electrically insulating a pole shoe with respect to a stator winding arranged on the pole shoe, which addresses the problem explained above.

This object is solved by the subject-matter of the independent patent claims. Preferred embodiments are the subject of the dependent patent claims.

Accordingly, the basic idea of the invention is to form an electrical insulation device for a stator of an electrical machine in at least two parts, with a base and with at least one insulation element separate from the base. The insulation device can be inserted into a winding opening of the stator, which is enclosed by a stator winding of the stator. The base of the insulation device according to the invention is preferably of plate-like design and, according to the invention, has a through-opening which is enclosed in sections by a base collar extending along an opening edge of the through-opening. The base collar can be supported on the stator winding when the insulation device is mounted in the winding opening. The through-opening of the insulation device is thus arranged in the winding opening of the stator. If a pole shoe is now inserted into the winding or through-opening, it cannot come into mechanical and electrical contact with the stator winding because of the insulation device inserted into the winding opening. The electrical insulation between the pole piece and the stator winding of the stator is provided by the base collar of the insulation device.

To facilitate insertion of the insulation device with the base collar into the winding opening, the base collar of the insulation device according to the invention has two interruptions extending along an opening edge enclosing the through-opening. This allows the base collar and also the base of the insulation device to be deformed, in particular bent, during insertion into the winding opening. This makes it easier to insert the insulation device, in particular the base collar, into the through-opening. After insertion of the pole piece, the openings formed by the interruptions - hereinafter also referred to as "collar opening" - can each be closed by an insulating element of the plate-like design essential to the invention. As a result, the stator winding and pole shoe are also electrically insulated from one another in the region of said electrical interruption.

As a result, the insulation device according to the invention presented here can be easily installed in a stator and offers improved insulation properties compared to conventional insulation devices.

In detail, the insulation device according to the invention comprises a base, preferably of plate-like design, made of an electrically insulating material, preferably of an electrically insulating plastic, in which a substantially rectangular through-opening having two opposite narrow sides and two likewise opposite broad sides is arranged. The through-opening serves to receive a pole shoe of the stator. The insulation device comprises a base collar integrally formed on the base, which extends along an opening edge of the through-hole enclosing the through-hole and thus along the two wide and narrow sides of the through-hole and in this way encloses the through-hole in sections. The base and the base collar are thus formed in one piece and of the same material. In the region of each of the two narrow sides, the base collar has an interruption forming a collar opening.

Thus, two collar openings or two interruptions are provided in the opposite narrow sides, which can preferably also lie opposite one another. According to the invention, the insulation device comprises a (first) insulation element, preferably of platelet-like design, for closing one (first) of the two collar openings. The electrical insulation device is thus formed at least in two parts and comprises the base and said (first) insulation element.

In a preferred embodiment, a collar extension protrudes from the base collar in the area of the two broad sides at an angle, preferably at an obtuse angle, and is preferably integrally formed on the base collar. This improves the electrical insulation of the stator winding.

In a further preferred embodiment, the (first) insulation element is arranged in the (first) collar opening and closes it at least partially, preferably completely. In this way, the insulation device is also provided with the desired electrical insulation properties in the region of the collar opening.

According to an advantageous further development, the two interruptions or collar openings divide the base collar into a first and a second partial collar. In this further development, the first partial collar extends from a first narrow side over a first broad side to a second narrow side of the through-opening. In this further embodiment, the second partial collar extends from the first narrow side over a second broad side to the second narrow side. In this further development, a first end portion of the first partial collar arranged in the region of the first narrow side and a first end portion of the second partial collar likewise arranged in the region of the first narrow side together delimit a first of the two interruptions or collar openings. A second end section of the first partial collar arranged in the region of the second narrow side and a second end section of the second partial collar likewise arranged in the region of the second narrow side together delimit a second of the two interruptions or collar openings in this further development.

Particularly preferably, a (second) insulation element can be arranged in the (second) collar opening and closes this second collar opening, preferably completely. In this way, the insulation device is also provided with the desired electrical insulation properties in the region of the collar opening.

The invention further relates to a stator for an electrical machine. The stator according to the invention comprises at least one stator winding which encloses several, i.e. at least three, winding openings which are arranged at a distance from one another in a circumferential direction of the stator. A pole shoe of the stator is arranged in at least one winding opening. In the at least one winding opening with pole shoe, between the pole shoe and the stator winding there is arranged an insulation device according to the invention presented above, so that the pole shoe is at least partially received in the through-opening of the at least one insulation device and/or passes through it. The advantages of the insulation device according to the invention presented above are therefore transferred to the stator according to the invention. In this case, the pole shoe is supported at least on the first insulation element, preferably additionally also on the second insulation element, of the insulation device. The plate-like base can be curved and thus adapted to the geometric shape of the stator with the stator winding.

In a preferred embodiment of the stator according to the invention, the base collar is supported externally on the stator winding enclosing the winding opening. As a result, the base is held stably in the winding opening.

According to an advantageous further development of the stator according to the invention, a respective pole shoe and an electrical insulation device according to the invention are provided in each winding opening. This extends the insulation effect of the insulation device according to the invention to all winding openings.

In another preferred embodiment, the first insulation element is supported inwardly, towards the through-opening, on the pole shoe and outwardly, away from the through-opening, on the base collar. Preferably, in this embodiment, the second insulation element - if present - can also be supported inwardly, toward the through opening, on the pole shoe and outwardly, away from the through opening, on the base collar.

It is expedient that the first insulation element can be biased towards the base collar by means of the pole shoe. Preferably, the second insulation element - if present - can also be biased towards the base collar by means of the pole shoe. In this way, the first or second insulation element is held particularly stably on the base collar.

Finally, the invention relates to an electric machine, in particular for a motor vehicle, with a stator according to the invention presented above and with a rotor rotatable relative to the stator. The advantages of the insulation device according to the invention presented above are therefore also transferred to the electric machine according to the invention.

Further important features and advantages of the invention will be apparent from the sub-claims, from the drawings and from the accompanying figure description based on the drawings.

It is understood that the above-mentioned features and those still to be explained below can be used not only in the combination indicated in each case, but also in other combinations or on their own, without leaving the scope of the present invention.

Preferred embodiments of the invention are shown in the drawings and will be explained in more detail in the following description, whereby the same reference signs refer to identical or similar or functionally identical components.

The following are shown schematically:
- Fig. 1: an example of an insulation device according to the invention in perspective view,
- Fig. 2: the insulation device of Fig. 1 in a plan view,
- Fig. 3: a side view of the insulation device of Fig. 1,
- Fig. 4: a partial perspective view of a stator according to the invention with mounted insulation device, but without mounted pole piece,
- Fig. 5: the stator of Fig. 4 from another perspective,
- Fig. 6: the stator of Fig. 5 with mounted pole shoe.

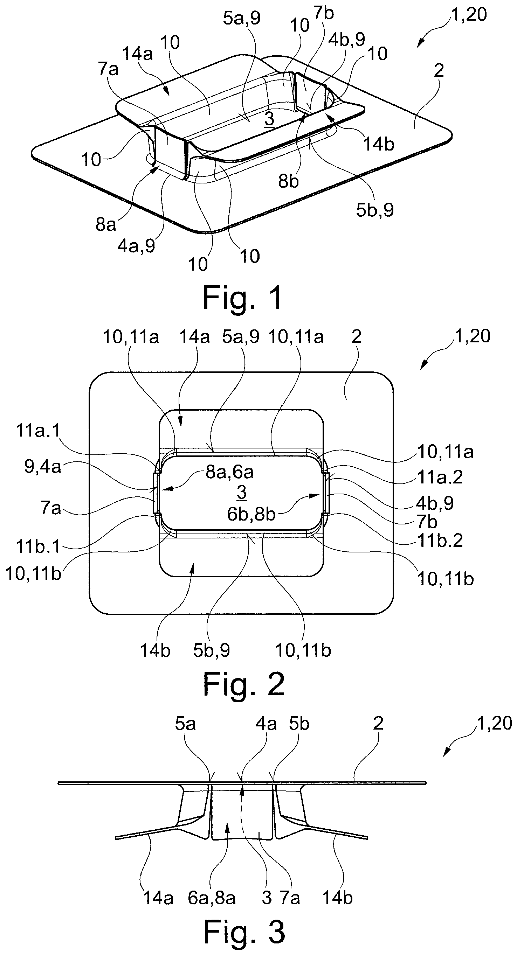

Figures 1 to 3 illustrate an example of an electrical insulation device 1 according to the invention for a stator 20 not shown in more detail in these figures. Figure 1 shows a perspective view, Figure 2 a top view and Figure 3 a side view. The insulation device 1 comprises a plate-like base 2 made of an electrically insulating material, in the example scenario made of an electrically insulating plastic. The plate-like base 2 may be curved as shown and thereby adapted to the geometry of the stator winding 24 of the stator 20. A substantially rectangular through-opening 3 having two opposing narrow sides 4a, 4b and two respective opposing broad sides 5a, 5b is formed in the base 2. The passage opening 3 is enclosed by an opening edge 9. The through-opening 3 serves to partially accommodate a pole piece (not shown in Figures 1 to 3) of the stator. The insulation device 1 comprises a base collar 10 integrally formed on the base 2. The base 2 and the base collar 10 are thus formed in one piece and of the same material. The base collar 10 extends along the two wide and narrow sides 4a, 4b, 5a, 5b of the through opening 3, thus enclosing the through opening 3 in sections.

As Figures 1 to 3 show, a force extension 14a, 14b, which is integrally formed on the base collar 10, projects from the base collar 10 at an obtuse angle in the region of the two broad sides 5a, 5b.

The base collar 10 has an interruption 8a, 8b in the region of each of the two narrow sides 4a, 4b. Each of the two interruptions 8a, 8b forms a respective collar opening 6a, 6b. thus, a respective collar opening 6a, 6b or interruption 8a, 8b is formed in the two mutually opposite narrow sides 4a, 4b, which can be opposite one another in the example of figures 1 to 3.

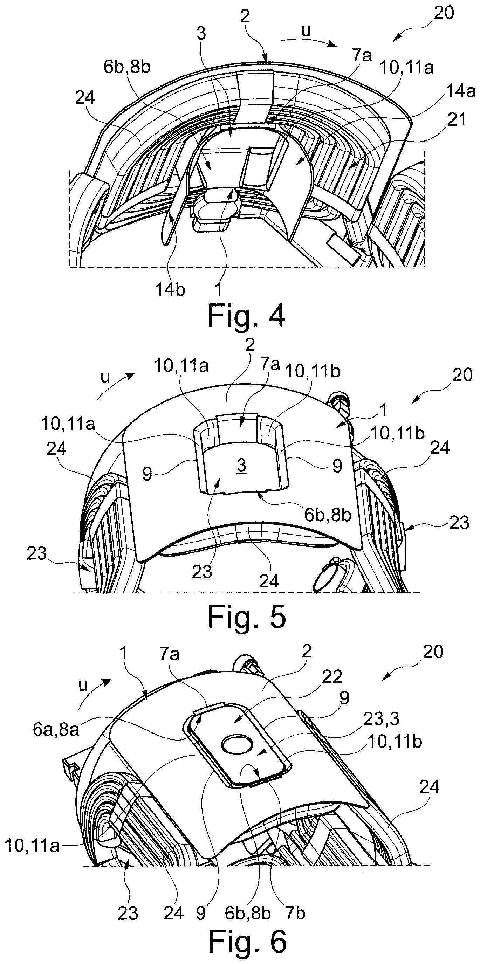

Furthermore, the insulating device 1 comprises two insulating elements 7a, 7b, each of which is formed in a platelet-like manner and is also formed separately and with respect to the base 2. The electrical insulation device 1 is thus formed in three parts in the example and comprises the base 2 and the two insulation elements 7a, 7b. The two interruptions 8a, 8b or collar openings 6a, 6b divide the base collar 10 into a first and a second partial collar 11a, 11b (cf. Fig. 2). The first partial collar 11a extends from a first narrow side 4a over a first broad side 5a to a second narrow side 4b of the through opening 3. The second partial collar 11b extends from the first narrow side 4a over a second broad side 5b to the second narrow side 4b. A first end section 11a.1 of the first partial collar 11a arranged in the region of the first narrow side 4a and a first end section 11b.1 of the second partial collar 11b likewise arranged in the region of the first narrow side 4a together delimit the first interruption 8a or first collar openings 6a. A second end section 11a.2 of the first partial collar 11a arranged in the region of the second narrow side 4b and a second end section 11b.2 of the second partial collar 11b also arranged in the region of the second narrow side 4b together delimit the second interruption 8b or second collar openings 6b. In the first collar opening 6a, a first insulation element 7a is arranged and completely closes the first collar opening 6a. In the second collar opening 6b, a second insulation element 7b is arranged and completely closes the second collar opening 6b. The insulation device 1 is inserted into a stator 20 of an electrical machine, which is shown in figures 4 and 5 in different perspective partial representations. The stator 20 may be part of an electrical machine not shown in the figures, in particular for a motor vehicle, which in addition to the stator 20 according to the invention also comprises a rotor rotatable relative to the stator.

According to Figures 4 and 5, the stator 20 comprises a stator winding 24 which encloses a plurality of winding openings 23 (cf. in particular Figure 5) which are arranged at a distance from one another along a circumferential direction U of the stator 20. An insulation device 1 according to the invention with the base 2 and the insulation elements 7a, 7b is inserted in each of the individual winding openings 23, as shown in Figures 4 and 5 for a single such insulation device 1. For clarity, in the assembled state of the stator 20 shown in figures 4 and 5, only the first insulation element 7a is assembled next to the base 2, but not the second insulation element 7b. After inserting the insulation device 1 into the winding opening 23, the pole shoe 22 is inserted into the through opening 3 of the insulation device 1, so that the pole shoe 22 passes through the through opening 3 and is also arranged in the winding opening 23 at the same time.

This scenario is shown in Figure 6. The base collar 10 of the insulation device 1 is now supported externally on the stator winding 24 enclosing the winding opening 23. In this state, the insulation device 1 is arranged between the pole shoe 22 and the stator winding 24, and thus ensures the desired electrical insulation between pole shoe 22 and stator 20 - in particular in the area of the two interruptions 8a, 8b of the base collar 10.

Outwardly, away from the through opening 3, the first insulation element 7a is supported on the base collar 10. Likewise, the second insulation element 7b is supported on the base collar 10 outward, away from the through opening 3. In this case, the first insulation element 7a can be biased toward the base collar 10 by means of the pole shoe 22. Likewise, the second insulation element 7b can be biased toward the base collar 10 by means of the pole shoe 22.

## Claims

1. Insulation device (1) for electrically insulating a stator winding (21) of a stator (20) of an electrical machine with respect to a pole shoe (22) of this stator (20),
- having a base (2), preferably of plate-like design, made of an electrically insulating material, preferably of an electrically insulating plastic, in which a substantially rectangular through-opening (3) having two mutually opposite narrow sides (4a, 4b) and two mutually opposite broad sides (5a, 5b) is arranged,
- with a base collar (10) integrally formed at the base (2), which extends along the two wide and narrow sides (4a, 4b, 5a, 5b) of the passage opening (3) and encloses the passage opening (3) in sections,
- wherein the base collar (5) in the region of the two narrow sides (4a, 4b) in each case has an interruption (7a, 7b) forming a collar opening (6a, 6b),
- with a (first) insulating element (7a) of plate-like design for closing one (first) (6a) of the two collar openings (6a, 6b).

2. Insulation device according to claim 1,
**characterized in that**
a respective, preferably plate-like, collar extension (14a, 14b), which is preferably integrally formed on the base collar (10), projects at an angle, preferably at an obtuse angle, from the base collar (10) in the region of the two broad sides (5a, 5b).

3. Insulation device according to claim 1 or 2,
**characterized in that**
the (first) insulation element (7a) is arranged in the (first) collar opening (6a) and closes it at least partially, preferably completely.

4. Insulation device according to one of the claims 1 to 3,
**characterized in that**
- the two interruptions (7a, 7b) divide the base collar (10) into a first and a second partial collar (11a, 11b),
- the first partial collar extends from a first narrow side (4a) via a first broad side (5a) to a second narrow side (4b) of the passage opening (3),
- the second partial collar (11b) extends from the first narrow side (4a) over a second broad side (5b) to the second narrow side (4b) of the passage opening (3),
- a first end portion (11a.1) of the first partial collar (11a) arranged in the region of the first narrow side (4a) and a first end portion (11b.1) of the second partial collar (11b), likewise arranged in the region of the first narrow side (4a), together delimit the first (8a) of the two interruptions (8a, 8b) and collar openings (6a, 6b) respectively,
- a second end section (11a.2) of the first partial collar (11a) arranged in the region of the second narrow side (4b) and a second end section (11b.2) of the second partial collar (11b), likewise arranged in the region of the second narrow side (4b), together delimit the second (8b) of the two interruptions (8a, 8b) and collar openings (6a, 6b), respectively.

5. Insulation device according to one of the preceding claims,
**characterized in that**
a (second) insulation element (7b) is arranged in the (second) collar opening (6b) and closes it at least partially, preferably completely.

6. Stator (20) for an electrical machine,
- having at least one stator winding (24) which encloses a plurality of winding openings (23) which are arranged at a distance from one another in a circumferential direction (U) of the stator (1),
- wherein a pole shoe (22) of the stator (1) is arranged in at least one winding opening (23),
- wherein an insulation device (1) according to one of the preceding claims is arranged in the at least one winding opening (23) between the pole shoe (22) and the stator winding (24), so that the pole shoe (22) is at least partially accommodated in the through-opening (3) of the at least one insulation device (1) or/and engages through the latter,
- wherein the pole shoe (22) is supported at least on the first insulation element (7a), preferably additionally also on the second insulation element (7b), of the insulation device (1).

7. Stator according to claim 6,
**characterized in that**
the base collar (10) is supported externally on the stator winding (24) enclosing the winding opening (23).

8. Stator according to claim 6 or 7,
**characterized in that**
a respective pole shoe (22) and an electrical insulation device (1) according to one of claims 1 to 5 are provided in each winding opening (23).

9. Stator according to one of claims 6 to 8,
**characterized in that**
- the first insulation element (7a) is supported inwardly, towards the through-opening (3), on the pole shoe (22) and outwardly, away from the through-opening (3), on the base collar (10),
- preferably the second insulation element (7b) is supported inwardly, towards the through-opening (3), on the pole shoe (22) and outwardly, away from the through-opening (3), on the base collar (10).

10. Stator according to one of the claims 6 to 9,
**characterized in that**
- the first insulation element (7a) is biased towards the base collar (10) by means of the pole shoe (22),
- preferably the second insulation element (7b) is biased towards the base collar (10) by means of the pole shoe (22).

11. Electric machine, in particular for a motor vehicle,
- comprising a stator according to any one of claims 6 to 10,
- comprising a rotor rotatable relative to the stator.
